# EUROPEAN PATENT APPLICATION

(11) **EP 4 620 771 A1**
(43) Date of publication of application: **24.09.2025**
(21) Application number: 23906076.7
(22) Date of filing: 22.12.2023
(51) Int. Cl.: B61H 13/00

(54) **REMOTE RELEASE CONTROL SYSTEM FOR AIR BRAKING OF RAILWAY VEHICLE**

(30) Priority: 23.12.2022 CN 202223450714 U
(71) Applicant: Knorr-Bremse Systems for Rail Vehicles (Suzhou) Co., Ltd., Suzhou, Jiangsu 215000 (CN)
(72) Inventor: CHEN, Mengxia, Suzhou, Jiangsu 215000 (CN); ZHAO, Jianfei, Suzhou, Jiangsu 215000 (CN)
(74) Representative: Prüfer & Partner mbB Patentanwälte · Rechtsanwälte
(86) International application number: PCT/CN2023/140891
(87) International publication number: WO 2024/131921

(57) **Abstract**

Disclosed in the present utility model is a remote release control system for air braking of a railway vehicle, comprising a remote release electromagnetic valve and a remote release control loop. The remote release electromagnetic valve comprises a control part, an intake valve, and an exhaust valve, wherein the control part is connected to the remote release control loop in series, the intake valve is used for connecting an upstream pressure source and a brake cylinder in a basic brake device, and the exhaust valve is communicated with an exhaust passage of the brake cylinder. The remote release control loop comprises a power supply, an operation button, a remote release relay, and a braking state relay. According to the remote release operation system of the present utility model, an operator does not need to walk to a passenger compartment to operate a cut-out cock one by one, and air braking can be completely released by means of one-click operation of a ground control center or a cab, so that time and labor are saved. A control circuit and an emergency braking loop are interlocked, the remote release function is invalid for emergency braking, and the emergency braking safety distance is not affected, thereby ensuring the operation safety

## Description

### Technical field

The present utility model relates to the field of braking devices and control in railway transport, and in particular relates to a remote release control system for air braking of a railway vehicle.

### Background art

If a train still has brakes on when traction is necessary, that is, brake release fails, the operation of the train is generally always negatively affected, and, if not dealt with promptly, the scheduled timetable for subsequent trains is affected; in more serious situations, passenger detraining and assistance become necessary, or the train is withdrawn from service. Some existing trains are not provided with a remote release function; manual cut-out cocks arranged below seats in passenger cabins are used, and a driver must go from the driver cab into the passenger cabin corresponding to the location of the fault to perform an operation, and can only perform operations one by one; if brake release fails during peak passenger capacity, the operations are time-consuming and laborious. Moreover, an isolated bogie loses braking functions including emergency braking, affecting a safe braking distance for stopping; although in some trains a remote release button is arranged in the driver cab, when operated, in general, once the driver presses the button, air braking of the entire train is immediately released, and, when the button is released, the remote release function is reset. In one aspect, a risk of uncontrolled movement of the train is greater due to a misoperation; in another aspect, if brake release failure occurs again after the button is released, the button must be pressed again or continuously pressed, reducing the efficiency of handling faults.

### Summary of the utility model

An object of the present utility model is to provide a remote release control system for air braking of a railway vehicle, wherein in a driver cab or ground control center, remote release can be performed on a foundation braking apparatus, quickly and effectively eliminating a brake release fault, improving vehicle availability; at the same time, a risk of uncontrolled movement of the train due to a misoperation is avoided, improving the safety of use.

A technical solution of the present utility model is:
A remote release control system for air braking of a railway vehicle, the remote release control system comprising a remote release electromagnetic valve and a remote release control circuit; the remote release electromagnetic valve comprises a control part, and an air intake valve and an exhaust valve, wherein the control part is connected in series in the remote release control circuit, and the air intake valve is normally open and the exhaust valve is normally closed; the air intake valve is used for connecting an upstream pressure source and a brake cylinder inside a foundation braking apparatus, and the exhaust valve connects an exhaust passage of the brake cylinder.

Preferably, the remote release control circuit comprises a power source, an operating button, a remote release relay and a brake state relay, wherein the remote release relay, the brake state relay and the control part of the remote release electromagnetic valve are connected in series between positive and negative electrodes of the power source, and the operating button is connected in parallel with the remote release relay.

Preferably, the brake cylinder inside the foundation braking apparatus is provided with two exhaust passages, wherein a first exhaust passage is used for discharging compressed air inside the brake cylinder when air brake release is normal; a second exhaust passage is connected to the exhaust valve of the remote release electromagnetic valve, such that when the first exhaust passage malfunctions, the exhaust valve is opened and compressed air inside the brake cylinder is discharged.

Preferably, a pressure sensor is provided on the first exhaust passage, and monitors a brake cylinder pressure in the foundation braking apparatus in real time, and uploads the pressure to a train network control system.

Preferably, when the control part in the remote release electromagnetic valve is de-energized, the air intake valve is open and the exhaust valve is closed; when the control part is energized, the air intake valve is closed and the exhaust valve is open.

Preferably, the remote release relay is remotely controlled by a ground control center, and can only be closed when the brakes of a train are not released; the brake state relay can only be closed when the train is in a non-braking state.

Preferably, the operating button is arranged on a train driver cab control console, and is a button that does not automatically reset, and a driver activates a brake release function by means of operating the button.

The advantages of the present utility model are:
With the remote release operation system of the present utility model, used in railway vehicle air braking, firstly, it is not necessary for an operator to go to passenger cabins and operate cut-out cocks one by one; a single operation in a ground control center or driver cab is sufficient to completely release air braking, saving on time and labor. Secondly, a control circuit is interlocked with an emergency brake circuit, and the remote release function has no effect on emergency braking, and a safe distance for emergency braking is not affected, ensuring operating safety; further, the remote release function can only be activated to be effective in non-braking conditions, further avoiding a risk of the uncontrolled movement of the train due to a misoperation, ensuring the safety of use.

### Brief description of the drawings

The present utility model is explained further below with reference to the figure and embodiments:

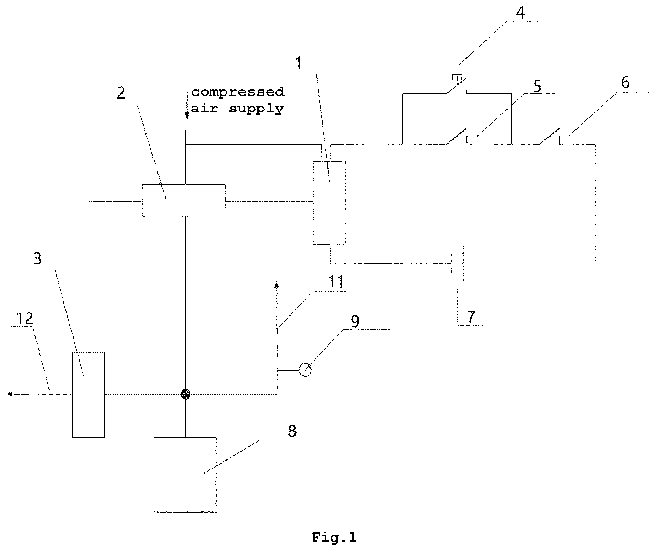

Fig. 1 is a schematic diagram of a remote release control system for air braking of a railway vehicle of the present utility model.

### Particular embodiments

A remote release control system for air braking of a railway vehicle of the present utility model comprises a remote release electromagnetic valve and a remote release control circuit; the remote release electromagnetic valve comprises a control part 1, and an air intake valve 2 and an exhaust valve 3, wherein the control part 1 is connected in series in the remote release control circuit, the air intake valve 2 is normally open, and the exhaust valve 3 is normally closed. When the control part 1 is de-energized, the air intake valve 2 is open and the exhaust valve 3 is closed; when the control part 1 is energized, the air intake valve 2 is closed and the exhaust valve 3 is open. The air intake valve 2 is used for connecting an upstream pressure source and a brake cylinder inside a foundation braking apparatus 8, and the exhaust valve 3 is connected to an exhaust passage of the brake cylinder. The remote release control circuit comprises a power source 7, an operating button 4, a remote release relay 5 and a brake state relay 6, wherein the remote release relay 5, the brake state relay 6 and the control part 1 of the remote electromagnetic valve are connected in series between positive and negative electrodes of the power source 7, and the operating button 4 is connected in parallel with the remote release relay 5.

The brake cylinder inside the foundation braking apparatus 8 is provided with two exhaust passages, wherein a first exhaust passage 11 is used for discharging compressed air inside the brake cylinder when air brake release is normal; a second exhaust passage 12 is connected to the exhaust valve 3 of the remote release electromagnetic valve, such that when the first exhaust passage 11 malfunctions, the exhaust valve 3 is opened and compressed air inside the brake cylinder is discharged. A pressure sensor 9 is provided on the first exhaust passage 11, and monitors a brake cylinder pressure in the foundation braking apparatus in real time, and uploads the pressure to a train network control system.

The remote release electromagnetic valve is interlocked with a train emergency brake circuit, meaning a remote release operation does not affect an emergency brake function. Under the premise that the brake state relay 6 is closed, by means of operating the operating button 4 or closing the remote release relay 5, a remote release function is activated, and the air intake valve 2 cuts off the upstream pressure source, while compressed air inside the brake cylinder of the foundation braking apparatus is discharged to the atmosphere through the exhaust valve 3. An operator can perform remote release on the foundation braking apparatus in a driver cab or a ground control center, without needing to go to passenger cabins to operate isolation cocks one by one, and can quickly and effectively eliminate a brake release fault, saving on time and labor, improving the vehicle availability; at the same time, a risk of uncontrolled movement of the train due to a misoperation is avoided, improving the safety of use.

During normal air braking, the required compressed air enters the interior of the brake cylinder of the foundation braking apparatus 8 by means of the air intake valve **2.** During normal air brake release, compressed air inside the brake cylinder is discharged to the atmosphere through the first exhaust passage 11, but if hardware on this passage jams or malfunctions in another way, the result is that compressed air in the brake cylinder cannot discharge to the atmosphere, that is, it results in brake release failure. The second exhaust passage 12 acts as a remote release control air line, which is independent of the first exhaust passage 11, and an independent electromagnetic valve and piston valve are provided on the hardware, and use thereof can be switched to when handling a fault.

The control part 1 of the remote release electromagnetic valve is normally in an off state, and the air intake valve 2 controlled thereby is in an open state and the exhaust valve 3 is in a closed state; that is, compressed air upstream of the air intake valve 2 can enter the interior of the brake cylinder of the foundation braking apparatus, and maintains braking pressure after passing through a pressure regulation unit, and the compressed air inside the brake cylinder does not communicate with the atmosphere. When the control part 1 is powered on, the remote release air intake piston valve 2 is in a non-open state, cutting off the supply of compressed air upstream, while the exhaust valve 3 is in an open state; that is, in one aspect, upstream compressed air no longer enters the interior of the brake cylinder of the foundation braking apparatus, avoiding a "filling while discharging phenomenon"; in another aspect, compressed air inside the brake cylinder is discharged to the atmosphere by means of the exhaust valve 3, achieving the object of air brake release. The control part 1 of the remote release electromagnetic valve being connected in series in the emergency brake circuit provides an internal interlocking function; when the emergency brake circuit is powered off and disconnected, the control part 1 of the remote release electromagnetic valve is also powered off, and therefore a remote release function is ineffective in an emergency brake state, ensuring safety.

To realize remote release of an unmanned train, and to further prevent a misoperation resulting in uncontrolled movement of the train, a remote release relay 5 and a brake state relay 6 are connected in series in a remote release control circuit, and the remote release relay 5 can only be closed when train braking does not release, and is remotely controlled by a ground control center; the brake state relay 6 can only be closed when the train is in a non-braking state such as traction or coasting, and a remote release operation is effective only when the two relays are closed at the same time; a remote release operation is ineffective when only one of the two relays is closed.

A remote release function can also be triggered by means of the operating button 4; the button is generally arranged on a driver cab control console, and is a type that does not automatically reset and has an indication lamp, and a driver can activate the brake release function by means of operating the button. The driver only needs to press the button once to maintain a current state, and only needs to press the button again to change state. When the train encounters a recurring fault when operating on a main line and it is necessary to operate the button, rather than repeated switching, only one operation on the main line is required, and a reset operation can be performed once the train returns to a depot for fault inspection. The built-in indication lamp of the button can show the current operating state; the indication lamp being on represents a brake release state position, and the indication lamp being off represents a brake release state reset. Activation of the remote release function by means of the operating button 4 also requires taking into account the state of the brake state relay 6; that is, an operation is only effective when in a non-braking state.

The pressure sensor 9 monitors a brake cylinder pressure in the foundation braking apparatus in real time, and uploads the pressure to a train network control system; when the pressure is greater than a certain threshold value P1, it is judged that braking is in an applied state; when the pressure is less than a certain threshold value P2, it is judged that braking is in a release state. When brake release fails, after a remote release function is used to discharge compressed air in the brake cylinder, when the pressure sensor 9 detects that the brake cylinder pressure is less than P2, such that braking is judged to be in a release state, a brake release failure indication disappears, and train traction performance is not affected, and the train can continue to operate normally.

Using the remote release operation system, firstly, it is not necessary for an operator to go to passenger cabins and operate cut-out cocks one by one; a single operation in a ground control center or a driver cab is sufficient to completely release air braking, saving on time and labor. Secondly, a control circuit is interlocked with an emergency brake circuit, and the remote release function has no effect on emergency braking, and a safe distance for emergency braking is not affected, ensuring operating safety; further, the remote release function can only be activated to be effective in non-braking conditions, further avoiding a risk of the uncontrolled movement of a train due to a misoperation, ensuring the safety of use.

The above embodiments are only provided to explain the technical concepts and characteristics of the present utility model, and the object thereof is to enable a person skilled in the art to understand and accordingly implement the content of the present utility model, and this cannot limit the scope of protection of the present utility model. All modifications made according to the spirit and essence of the main technical solution of the present utility model shall fall within the scope of protection of the present utility model.

## Claims

1. A remote release control system for air braking of a railway vehicle, **characterized in that** the remote release control system comprises a remote release electromagnetic valve and a remote release control circuit; the remote release electromagnetic valve comprises a control part (1), and an air intake valve (2) and an exhaust valve (3), wherein the control part (1) is connected in series in the remote release control circuit, and the air intake valve (2) is normally open and the exhaust valve (3) is normally closed; the air intake valve (2) is used for connecting an upstream pressure source and a brake cylinder inside a foundation braking apparatus (8), and the exhaust valve (3) connects an exhaust passage of the brake cylinder.

2. The remote release control system for air braking of a railway vehicle as claimed in claim 1, **characterized in that** the remote release control circuit comprises a power source (7), an operating button (4), a remote release relay (5) and a brake state relay (6), wherein the remote release relay (5), the brake state relay (6) and the control part (1) of the remote release electromagnetic valve are connected in series between positive and negative electrodes of the power source (7), and the operating button (4) is connected in parallel with the remote release relay (5).

3. The remote release control system for air braking of a railway vehicle as claimed in claim 2, **characterized in that** the brake cylinder inside the foundation braking apparatus (8) is provided with two exhaust passages, wherein a first exhaust passage (11) is used for discharging compressed air inside the brake cylinder when air brake release is normal; a second exhaust passage (12) is connected to the exhaust valve (3) of the remote release electromagnetic valve, such that when the first exhaust passage (11) malfunctions, the exhaust valve (3) is opened and compressed air inside the brake cylinder is discharged.

4. The remote release control system for air braking of a railway vehicle as claimed in claim 3, **characterized in that** a pressure sensor (9) is provided on the first exhaust passage (11), and monitors a brake cylinder pressure in the foundation braking apparatus in real time, and uploads the pressure to a train network control system.

5. The remote release control system for air braking of a railway vehicle as claimed in claim 4, **characterized in that** when the control part (1) in the remote release electromagnetic valve is de-energized, the air intake valve (2) is open and the exhaust valve (3) is closed; when the control part (1) is energized, the air intake valve (2) is closed and the exhaust valve (3) is open.

6. The remote release control system for air braking of a railway vehicle as claimed in claim 4, **characterized in that** the remote release relay (5) is remotely controlled by a ground control center, and can only be closed when the brakes of a train are not released; the brake state relay (6) can only be closed when the train is in a non-braking state.

7. The remote release control system for air braking of a railway vehicle as claimed in claim **6, characterized in that** the operating button (4) is arranged on a train driver cab control console, and is a button that does not automatically reset, and a driver activates a brake release function by means of operating the button.
